# DEMANDE DE BREVET EUROPEEN

(11) **EP 0 579 552 A1**
(43) Date de publication de la demande: **19.01.1994**
(21) Numéro de dépôt: 93401830.0
(22) Date de dépôt: 15.07.1993
(51) Int. Cl.: B60S 1/24, F16C 7/02

(54) **Bielle de liaison pour une timonerie d'entraînement d'un système d'essuie-glace de véhicule automobile**

(30) Priorité: 15.07.1992 FR 9208708
(71) Demandeur: VALEO SYSTEMES D'ESSUYAGE, 78180 Montigny-Le-Bretonneux (FR)
(72) Inventeur: Boissac, Jean-Paul, F-86100 Chatellerault (FR)
(74) Mandataire: Gamonal, Didier

(57) **Abrégé**

L'invention propose une bielle de liaison du type comportant un corps tubulaire cylindrique, caractérisée en ce qu'elle comporte une fente longitudinale (16) pour permettre l'évacuation des liquides et des impuretés qui pénétrent à l'intérieur de la bielle (10).

## Description

La présente invention concerne une bielle de liaison pour une timonerie d'entraînement d'un système d'essuie-glace de véhicule automobile.

Dans les systèmes d'essuie-glace qui équipent actuellement les véhicules automobiles, les manivelles motrices sont chacune solidaires en rotation, d'une part d'un arbre moteur et, d'autre part d'un arbre d'extrémité d'un maneton à rotule sur lequel s'articule une bielle de liaison à une manivelle de sortie du mécanisme d'entraînement du balai d'essuie-glace.

Afin que la bielle de liaison puisse encaisser les efforts importants auxquels elle est soumise, et qu'elle puisse être réalisée à un faible coût, il a déjà été proposé qu'elle soit constituée par un corps tubulaire cylindrique dont les extrémités axiales opposées sont aplaties selon une direction perpendiculaire à l'axe du corps.

Bien qu'elle donne satisfaction du point de vue de la résistance des matériaux, une telle conception a pour inconvénient que la bielle ainsi conformée constitue un réservoir à l'intérieur duquel peut s'accumuler par exemple de l'eau de pluie ainsi que des impuretés.

Une telle accumulation a pour inconvénient de poser des problèmes de corrosion interne de la bielle qui, à terme, nuisent à sa résistance et à sa fiabilité d'utilisation.

D'autre part, l'eau et les impuretés accumulées à l'intérieur de la bielle tubulaire sont parfois évacuées brusquement, et notamment en cas de virage important pris à vitesse élevée, par les extrémités de la bielle et viennent souiller le pare-brise en nuisant ainsi à la bonne visibilité du conducteur.

Afin de remédier à ces inconvénients, l'invention propose une bielle de liaison du type mentionné précédemment, caractérisée en ce qu'elle comporte au moins une ouverture, en forme de fente longitudinale, s'étendant sur une portion radiale de dimension réduite.

Selon d'autres caractéristiques de l'invention :
- la fente longitudinale s'étend sur toute la longueur du corps tubulaire cylindrique ;
- le corps tubulaire cylindrique est de section circulaire ;
- le corps tubulaire cylindrique présente en section sensiblement la forme d'un C ;
- le corps tubulaire cylindrique est de section sensiblement rectangulaire ;
- le corps tubulaire cylindrique est réalisé par formage à partir d'une bande métallique.

D'autres caractéristiques et avantages de l'invention apparaîtront à la lecture de la description détaillée qui va suivre pour la compréhension de laquelle on se reportera aux dessins annexés sur lesquels :
- la figure 1 est une vue longitudinale de la bielle selon l'invention ;
- la figure 2 est une vue en section transversale selon la ligne A-A de la figure 1 et cela à plus grande échelle ;
- la figure 3 est une variante de la figure 1 ;
- les figures 4 et 5 illustrent les étapes de réalisation de la bielle selon l'invention ;
- les figures 6 et 7 illustrent deux variantes de réalisation d'une bielle conforme aux enseignements de l'invention.

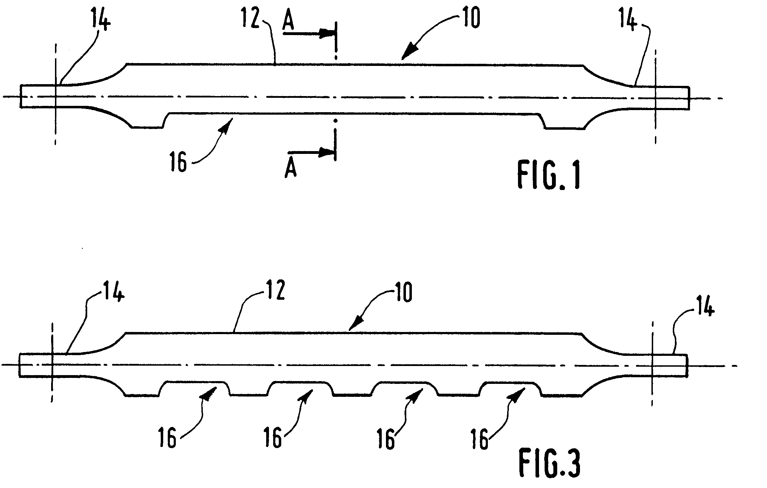

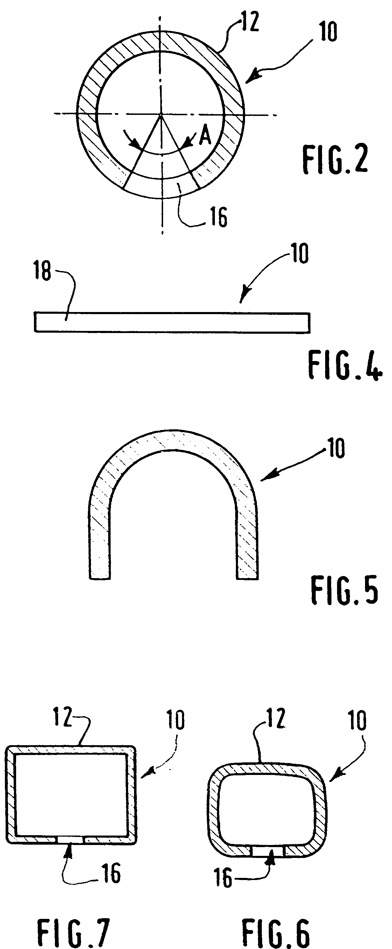

Comme on peut le voir sur les figures 1 et 2, la bielle de liaison 10 est constituée d'un corps cylindrique tubulaire 12 dont les extrémités 14 ont été aplaties selon une direction perpendiculaire au corps pour former des logements de réception (non représentés) de moyens de liaison, tels qu'une rotule par exemple.

Comme visible sur la figure 2, le corps 12 de la bielle présente en section, par un plan transversal perpendiculaire à sa direction longitudinale rectiligne, un profil en forme d'anneau circulaire comportant une fente 16.

Cette fente longitudinale 16 s'étend, comme visible sur la figure 1, tout au long ou en partie du corps tubulaire 12 et sur une portion circulaire radiale inférieure de dimension réduite qui, dans l'exemple représenté, correspondant à un angle A d'environ 60° en étant symétrique par rapport à l'axe vertical de la section considérée. Cette fente 16 peut s'étendre, également, comme représenté sur la figure 3, de manière interrompue le long du corps 12 en laissant subsister des ponts de matière 18 entre deux fentes 16 successives.

La bielle 10 se présente ainsi sous la forme d'un corps tubulaire cylindrique allongé comportant une fente longitudinale qui, la bielle étant montée sur le véhicule de manière à ce que la fente 16 soit orientée sensiblement verticalement vers le bas, permet l'évacuation immédiate de tout liquide et/ou impuretés pénétrant à l'intérieur de la bielle 10.

Comme cela est illustré aux figures 4 et 5, la bielle 10 illustrée à la figure 1 peut être réalisée par des opérations successives de formage à partir d'une bande de tôle, et la bielle qui en résultera, présentera une fente s'étendant sur la totalité de la bielle, extrémité 14 comprise.

Dans ces opérations de formage, la bande de tôle 18 est pliée dans une première étape pour obtenir la forme représentée à la figure 4 qui correspond sensiblement à une forme de U, puis dans une ultime étape cette forme de U est conformée pour obtenir une section sensiblement circulaire comme représentée à la figure 2.

Dans la variante de réalisation illustrée à la figure 6, le profil de la section transversale de la bielle 10 n'est plus circulaire mais est sensiblement en forme de C.

Dans le mode de réalisation illustré à la figure 7, le profil de la section transversale de la bielle 10 est de forme sensiblement rectangulaire.

## Revendications

1. Bielle de liaison (10) pour une timonerie d'entraînement d'un système d'essuie-glace, notamment de véhicule automobile, du type comportant un corps tubulaire cylindrique (12), avec des extrémités (14) aplaties, caractérisée en ce qu'elle comporte au moins une ouverture (16), en forme de fente longitudinale, s'étendant sur une portion radiale de dimension réduite.

2. Bielle selon la revendication 1, caractérisée en ce que la fente (16) s'étend sur toute la longueur du corps tubulaire cylindrique (12).

3. Bielle de liaison selon la revendications 1 ou 2, caractérisée en ce que le corps tubulaire cylindrique (12) est de section circulaire.

4. Bielle selon l'une quelconque des revendications 1 à 2, caractérisée en ce que le corps tubulaire cylindrique (12) présente en section sensiblement la forme d'un (C).

5. Bielle de liaison selon l'une quelconque des revendications 1 à 2, caractérisée en ce que le corps tubulaire cylindrique (12) est de section sensiblement rectangulaire.

6. Bielle selon l'une quelconque des revendications 1 à 5, caractérisée en ce que le corps tubulaire cylindrique (12) est réalisé par formage à partir d'une bande métallique.
